# EUROPEAN PATENT APPLICATION

(11) **EP 1 041 701 A2**
(43) Date of publication of application: **04.10.2000**
(21) Application number: 00106541.6
(22) Date of filing: 27.03.2000
(51) Int. Cl.: H02K 7/12, H02K 7/116

(54) **Gear-motor**

(30) Priority: 30.03.1999 IT TO990242
(71) Applicant: BITRON S.p.A., 10042 Nichelino (Torino) (IT)
(72) Inventor: Leo, Danilo, 20099 Sesto San Giovanni (MI) (IT)
(74) Representative: Lotti, Giorgio

(57) **Abstract**

Gear-motor (1) presenting a rotor (7), an entrance pinion (14) of a kinematic transmission (3) for the derating of an angular speed off the rotor (7), a box (4) supporting the rotor (7) and the pinion (14) themselves, and a stopping device (20) to stop at least the pinion (14) in a stopping operative condition; the stopping device (20) presenting a fixed portion (21) which is integral to the box (4), and a mobile portion (22) which is integral to the pinion (14) and can be engaged to the fixed portion (21) in said stopping operative condition.

## Description

The present invention relates to a gear-motor.

Gear-motors of known types generally include a gear-motor, a kinematic gearing-down transmission and a boxed element supporting the gear-motor and the transmission themselves. Gear-motors of the above mentioned type are normally used in carrying out mechanical works at a speed which is lower than that of the motor and with variable imposed loads, which in some applications, rest upon the motor even when the motor is not fed. In this last conditions, in order to avoid both the breaking and the motoring over of the gear-motor itself due to part of the load, it is necessary to prevent the load itself from moving.

In order to do that, gear-motors include also a locking device which is located between the motor and the kinematic transmission, and is adapted to stop any movement of the kinematic transmission itself, once the motor is no longer fed. However, the implementation of the locking device implies, an increase in the number of the elements needed for the making of the gear-motor, and considering the huge production volume, it can be easily understood that the introduction of any additional element can cause a significant increase both in the production costs and the assembly time.

It is an object of the present invention to provide a gear-motor that can be produced easily and at low cost, and which doesn't presents the above mentioned inconveniences.

According to the present invention a gear-motor is provided which comprises a rotor, an entrance element of a kinematic transmission for the derating of an angular speed of the rotor, a boxed element supporting the rotor and the entrance element, and stopping means to stop at least the entrance element in a stopping operative condition, the gear-motor being characterised in that said stopping means include a fixed portion which is integral to said boxed element, and a mobile portion which is integral to said entrance element and can be engaged to the fixed portion in said stopping operative condition.

In the following the invention is described with reference to a non-restrictive embodiment as shown in the appended drawings in which:
- figure 1: is a perspective and exploded view of a preferred embodiment of the invention in which some parts are not included for the sake of clarity; and
- figure 2: is a perspective view of a detail in figure 1.

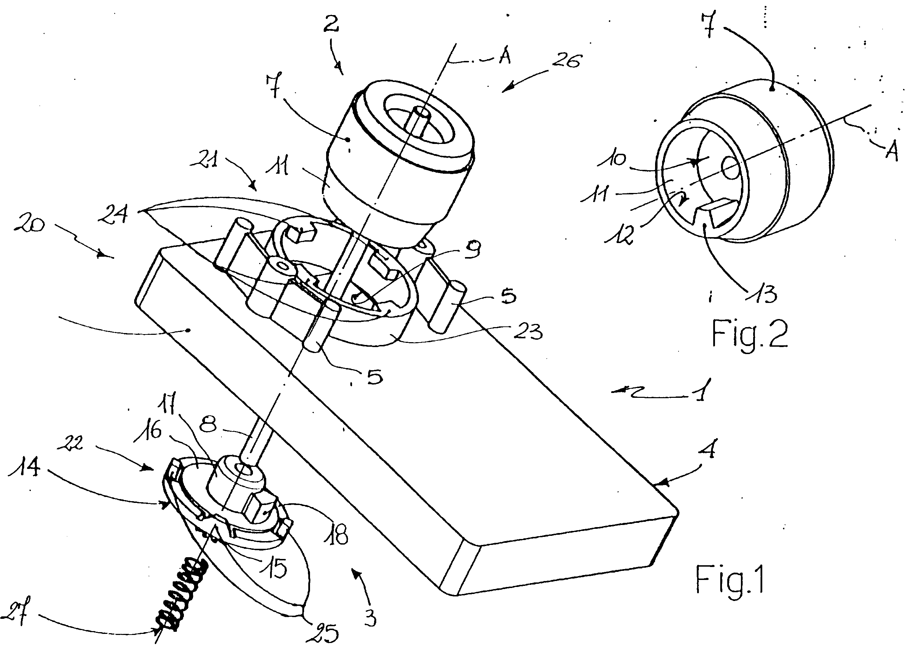

With reference to figure 1, reference number 1 indicates a gear-motor 1 on the whole which includes an electric motor 2 acting on a kinematic transmission 3 adapted for the gearing-down of an angular speed of the motor 2, and a box 4 presenting externally two brackets 5 supporting the motor 2 and containing the transmission 3.

The motor 2 includes a stator (already known and then not shown) located on the brackets 6, and a rotor 7, which is located in a way that allows it to rotate and slide axially on a shaft 8 presenting a longitudinal axis A, and is arranged so that it is located in a window 9 made in the box 4 co-axially to the axis A itself. The rotor 7 can move along the shaft due to the magnetic field generated by said stator and includes, on the side towards the window 9, an annular surface 10 transversal to the axis A, a cylindrical wall 11 transversally extending from the surface 10 itself by which a cylindrical chamber 12 is defined, and a driving tooth which is integral with the wall 11 and placed inside the chamber 12 itself.

The transmission 3 includes an entrance pinion 14, which is mounted in such way that it can rotate and slide axially on the axis 8 and through the window 9, and in turn includes a toothed portion 15, a flange 15 integral with the portion 15 itself and a cylindrical portion 17 which is locates on the opposite side of the portion 15 in relationship to the flange 16.

The portion 17 is adapted to be inserted inside the chamber 12 and presents a respective driving tooth 18, which extends radially towards the external part of the portion 17 itself and is above the flange 16 being adapted to be engaged by the tooth 13 of the rotor 7.

Besides, the gear-motor 1 includes a locking device 20, which is adapted to block the pinion 14 in a stopping operative condition, and in turn includes a fixed portion 21 integral with the box 4, and a mobile portion 22 which is integral with the pinion 14 itself and can be engaged to the fixed portion 21 in the stopping operative condition. The fixed portion 21 is made integral with the box 4 and includes an annular frame 23 located around the window 9, between the brackets 5, and four stopping teeth 24 which are evenly placed around the central axis A extending from the frame 23 towards the axis A itself so that they occupy the opening of the window 9. In a plane transversal to the axis A, the teeth 24 present a basically rectangular shape or, alternatively, present, on the same transversal plane, a basically trapezoidal shape due to their being bevelled at the sides by an angle varying from 30° to 60°.

The mobile portion 22 is integral with the flange of the pinion 14, slides through the window 9 along the axis A and includes four facing teeth 25, which are evenly located around the axis A, and can selectively be engaged to the stopping teeth 24 to stop the rotation of the pinion 14.

The teeth 25 are bevelled at the sides by an angle of 45° and present, on a cylindrical plane which is coaxial to the axis A, a basically trapezoidal shape in order to dissipate the kinetic energy of the pinion 14 while it is locked.

Finally, the gear-motor 1 includes a movement device 26 which is adapted to move the pinion 14 between said stopping operative position in which the teeth 25 are located next to the respective teeth 24, and an operational operative position, in which the teeth 25 are disengaged from the teeth 25 while the tooth 18 is engaged to the tooth 13 of the rotor 7.

The device 26 includes an active magnetic portion defined by the rotor 7 and a reactive elastic portion defined by a cylindrical helical spring 27, which is placed on the opposite side of the rotor 7 in relationship to the pinion 14, and is partially housed in a seat (not shown) made inside the pinion 14 itself.

During usage, when the electric motor 2 is activated, the above mentioned stator generates a magnetic field which not only rotates the rotor 7 around the shaft 8 but moves the rotor 7 itself along the shaft 8 and towards the window 9 so that the portion 17 is completely inserted inside the chamber 12.

As a consequence of the axial movement and the simultaneous rotation of the rotor 7, the driving tooth 13 of the rotor 7 itself become engaged to the driving tooth 18 of the pinion 14 and drive the pinion 14 itself into rotation around the axis A while activating the kinematic transmission 3. At the same time, since the rotor 7 acts as an active magnetic portion of the device 20, the respective surface 10 pushes the pinion 14 along the shaft 8 against the reactive elastic action of the spring 27, and moves the pinion 14 away from its stopping operative position towards its operational operative position. Due to the fact that the pinion 14 is moved away from the window 9 the facing teeth 25 become disengaged from the stopping teeth 24. On the other hand, when the electric motor 2 is not activated, the rotor 7 is no longer submitted to the action of the magnetic field and the active elastic expansion action of the spring 27 makes both the pinion 14 and the rotor 7 move along the shaft 8 in a direction which is opposite to the previous one. The axial displacement of the pinion 14 towards the window 9 makes the teeth 25 become again engaged to the teeth 24 thus stopping the rotation of the pinion 14 around the axis A. Since the engagement of the teeth 24 and 25 occurs when the pinion 14 is still rotating, the surfaces of these teeth which are bevelled by 45° cushion the impact and dissipate the kinetic energy of the rotation of the pinion 14 itself.

Once the pinion 14 is arranged in its stopping operative position, the load (not shown) imposed at the exit of the transmission 3 is no longer applied to the rotor 7 not even in the case the teeth 13 and 18 remain in contact.

## Claims

1. A gear-motor (1) which comprises a rotor (7), an entrance element (14) of a kinematic transmission (3) for the derating of an angular speed of the rotor (7), a boxed element (4) supporting the rotor (7) and the entrance element (14), and stopping means (20) to stop at least the entrance element (14) in a stopping operative condition, the gear-motor (1) being characterised in that said stopping means (20) include a fixed portion (21) which is integral to said boxed element (4), and a mobile portion (22) which is integral to said entrance element (14) and can be engaged to the fixed portion (21) in said stopping operative condition.

2. A gear motor as claimed in claim 1, characterised in that the boxed element (4) includes a window (9) presenting a central axis (A); said fixed portion (21) including an annular frame (23) located around the window (9) itself, and at least a stopping tooth (24) extending from the frame (23) towards the window (9).

3. A gear motor as claimed in claim 2, characterised in that said fixed portion (21) includes four stopping teeth (24) evenly located around said central axis (A).

4. A gear motor as claimed in claim 2 or 3, characterised in that the stopping tooth (24) presents a basically rectangular shape on a plane which is transversal to said central axis (A).

5. A gear motor as claimed in claim 2 or 3, characterised in that the stopping tooth (24) presents a basically trapezoidal shape on a plane which is transversal to said central axis (A).

6. A gear motor as claimed in any of the previous claims from 2 to 5, characterised in that the mobile portion (22) is slidingly mounted through the window (9) itself along said central axis (A) and includes at least a facing tooth which can be selectively engaged to the stopping tooth (24).

7. A gear motor as claimed in claim 6, characterised in that said mobile portion (22) includes four facing teeth (25) evenly placed around said central axis (A).

8. A gear motor as claimed in claim 6 or 7, characterised in that the facing tooth (25) presents on a cylindrical plane which is coaxial to the central axis (A), a basically trapezoidal shape.

9. A gear motor as claimed in claim 6, 7 or 8, characterised in that it comprises means (20) adapted for moving said mobile portion (22) said means including an active/passive magnetic portion (7) and an active/passive elastic portion (27) placed on opposite sides of the entrance element (14).

10. A gear motor as claimed in claim 9, characterised in that said active/passive elastic portion (27) is defined by a spring (27) which is mounted next to said entrance element.
